# EUROPÄISCHE PATENTSCHRIFT

(11) **EP 0 529 486 B1**
(45) Veröffentlichungstag und Bekanntmachung des Hinweises auf die Patenterteilung: **02.11.1995**
(21) Anmeldenummer: 92114100.8
(22) Anmeldetag: 19.08.1992
(51) Int. Cl.: F16F 9/05, F16F 7/00, B60G 17/04

(54) **Luftfeder mit erhöhter Steifigkeit**
Airspring with increased stiffness
Ressort pneumatique à rigidité élevée

(30) Priorität: 24.08.1991 DE 4128126
(43) Veröffentlichungstag der Anmeldung: 03.03.1993
(73) Patentinhaber: Continental Aktiengesellschaft, 30165 Hannover (DE); IVECO FIAT S.p.A., 10156 Torino (IT)
(72) Erfinder: Schneider, Eckhard, Dr., W-3160 Lehrte (DE); Clausen, Jens, W-3000 Hannover (DE); Dal Col, Vittorio, Turin (IT)

(56) Entgegenhaltungen:
- WO-A-90/01645
- DE-A- 3 742 340
- FR-A- 1 540 178
- FR-A- 2 534 997
- GB-A- 830 283
- US-A- 2 916 307

## Beschreibung

Die Erfindung betrifft eine Luftfeder gemäß dem Oberbegriff des Patentanspruchs 1.

Die verschiedenen Vorteile des Einsatzes von Luftfedern in Fahrgestellen von Nutzfahrzeugen sind bekannt. Ein Vorteil wird darin gesehen, daß das Luftvolumen der Luftfeder relativ kleine Steifigkeiten ergibt, welche Eigenfrequenzen der Federung bei Nominallast nicht über 1,6 bis 1,7 Hz entsprechen.

Für einige Anwendungen ist diese niedrige Steifigkeit der Luftfeder allerdings von Nachteil. Bei Fahrzeugen mit hohem Schwerpunkt und weicher Federung können große Wankwinkel bei Kurvenfahrten auftreten. Für diese Fälle wäre es wünschenswert, Eigenfrequenzen auch über 2 Hz zu erreichen.

Um die Steifigkeit einer Luftfeder zu ändern, ist es aus der DE-AS 1 022 479 bekannt, einen Luftfederbalg über ein Zwischenrohr mit einer Kammer zu verbinden, die ein Luftzusatzvolumen enthält. Der untere Teil der Kammer ist mit Flüssigkeit gefüllt. Die Menge der Flüssigkeit kann über entsprechende Ventile und Rohrleitungen verringert oder vergrößert werden. Um eine steifere Federcharakteristik zu erreichen, wird das Gesamtluftvolumen durch Zuführen von Flüssigkeit in die Kammer verringert. Die Eigenfrequenzen der Luftfederung liegen nun in einem höheren Bereich.

Als Nachteil dieser Luftfeder wird angesehen, daß die notwendige hydraulische Ver- und Entsorgungsanlage technisch aufwendig ist und einen erheblichen Platzbedarf erfordert, der üblicherweise in Fahrzeugen nicht vorhanden ist.

In einem nicht vorveröffentlichten Vorschlag wird bereits ein Luftfedersystem beschrieben, bei dem der Luftfederbalg teilweise mit einem nicht mit der Luftfeder verbundenen Medium ausgefüllt ist. Die Luftfeder weist dadurch ein geringeres, komprimierbares Luftvolumen auf, als es üblicherweise durch die Luftfederkonstruktion gegeben ist. Die Luftfeder ist dadurch mit einer steiferen Federcharakteristik ausgestattet, so daß höhere Eigenfrequenzen der Luftfeder vorliegen.

Aus der FR-A-25 34 997 ist ein Federdämpfer mit flexibler Wand bekannt, in dessen Federdämpferkammer elastomere Partikelchen eingebracht sind. Diese Federdämpferkammer ist über ein Gasfilter mit der Atmosphäre verbunden. Die elastomeren Partikelchen dienen als Arbeitsmedium, das in der Federdämpferkammer eingeschlossen ist. Daher ist die Packungsdichte bzw. Packungswirksamkeit der elastomeren Partikel so gewählt, daß ein freier Raum zwischen den einzelnen Partikelchen verbleibt. Es ist nicht vorgesehen, die Federdämpferkammer durch geregelte Druckluftzufuhr in den Federungseigenschaften oder bezüglich des Abstandes der Anschlußplatten einer veränderbaren Last anzupassen.

Der Erfindung liegt die Aufgabe zugrunde, eine Luftfeder der eingangs beschriebenen Art zu schaffen, die sich bezüglich der volumenreduzierenden Maßnahme durch eine praktische und einfache Handhabung auszeichnet.

Die Aufgabe wird erfindungsgemäß durch die im Kennzeichen des Anspruchs 1 genannten Merkmale gelöst.

Schüttfähige Festkörper können von dem Luftfederhersteller oder dem Nutzfahrzeughersteller bequem vorgehalten und in den jeweiligen Luftfederrollbalg eingefüllt werden. Die Festkörper können aus einem Granulat, vorzugsweise aus Polymermaterial bestehen. Das Granulat muß leicht und im Vergleich zur Luft nahezu inkompressibel, aber elastisch und verschleißfest sein.

Besteht das eingefüllte Medium vorzugsweise aus Kugeln aus Polymermaterial, wird eine hohe Packungsdichte bei zufälliger Schichtung erreicht. Das reine Volumen des Schüttgutes ist größer als bei der Verwendung von Granulat.

Der Durchmesser des einzelnen Festkörperteilchens ist wesentlich kleiner als die Distanz der beiden Abschlußteile des Luftfederrollbalges im eingefederten Zustand.

Der mittlere Durchmesser der Festkörperteilchen ist kleiner als die Differenz zwischen dem Innendurchmesser des elastomeren Rollbalges und dem maximalen Außendurchmesser des Abrollkolbens zuzüglich der Wanddicke des Rollbalges.

In weiterer vorteilhafter Ausgestaltung der Erfindung ist die Luftanschlußöffnung zum Luftfederrollbalg von einem Sieb abgedeckt.

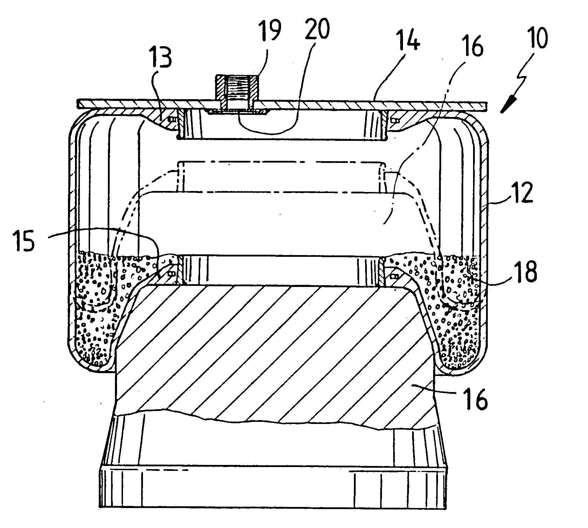

Anhand der Zeichnung wird nachstehend ein Ausführungsbeispiel der Erfindung näher erläutert.

Eine Luftfeder 10 weist einen als Rollbalg ausgebildeten Luftfederbalg 12 auf, der mit seinem oberen Wulst 13 an einem konischen Dichtsitz einer Anschlußplatte 14 befestigt ist. Am unteren Ende ist der Rollbalg 12 mit seinem Endwulst 15 an einem konischen Dichtsitz eines Abrollkolbens 16 befestigt.

Die Anschlußplatte 14 wird über hier nicht gezeigte Elemente am Fahrzeugrahmen befestigt, während der Abrollkolben 16 an einem beweglichen Teil der Fahrzeugachse befestigt wird.

Im Inneren des Rollbalges 12 befinden sich eine Menge Kugeln 18 aus einem festen Material. Die Kugeln 18 sind vorzugsweise aus einem Polymermaterial hergestellt und haben einen Durchmesser, der wesentlich kleiner ist als die Differenz zwischen dem Innendurchmesser des Rollbalges 12 und dem maximalen Außendurchmesser des Abrollkolbens 16 zuzüglich der Wanddicke des Rollbalges 12.

Die Menge der Kugeln 18 wird so gewählt, daß die erwünschte Erhöhung der Federsteifigkeit eintritt.

Die Anschlußplatte 14 ist mit einem Luftanschluß 19 versehen, der von einem Sieb 20 abgedeckt ist. Dieses Sieb 20 verhindert, daß die Kugeln 18 den Luftfederbalg 12 während des Betriebes, der Montage oder Lagerung verlassen können.

## Patentansprüche

1. Luftfeder für ein Nutzfahrzeug mit einem elastomeren, unter Druck setzbaren Luftfederbalg mit folgenden Merkmalen:
a) der Luftfederbalg ist mit zwei starren Anschlußteilen (14, 16) verbunden und zum Teil mit schüttfähigen Festkörpern (18) aus polymerem Material gefüllt, das weniger kompressibel als Luft ist, um die Steifigkeit der Luftfeder zu erhöhen,
b) die Festkörper (18) haben Abmessungen, die wesentlich kleiner sind als die Distanz zwischen den beiden Anschlußteilen (14, 16), wenn der Luftfederbalg (12) im eingefederten Zustand ist,
**dadurch gekennzeichnet,**
daß die Anschlußteile (14, 16) aus einer Anschlußplatte (14) und einem Abrollkolben (16) bestehen,
daß der Luftfederbalg als Rollbalg ausgebildet und mit seinem oberen Dichtwulst an einem ringförmigen Dichtsitz an der oberen Abschlußplatte (14) und mit einem unteren Dichtwulst (15) an einem ringförmigen Dichtsitz auf der stirnseitigen Oberfläche des Abrollkolbens (16) befestigt ist,
daß die Festkörper (18) kugelförmig oder granulatförmig sind und aus einem polymeren Material bestehen, das im wesentlichen inkompressibel, elastisch und verschleißfest ist,
daß der Durchmesser der kugelförmigen Festkörper (18) geringer ist als die Differenz zwischen dem inneren Durchmesser des Rollbalges (12) und dem größten Außendurchmesser des Abrollkolbens zuzüglich der Wanddicke des Rollbalges (12).

2. Luftfeder nach Anspruch 1, dadurch gekennzeichnet, daß die Luftanschlußöffnung (19) von einem Sieb (20) abgedeckt ist.

## Claims

1. Air spring for a commercial vehicle, having an elastomeric, pressurisable air spring bellows with the following features;
a) the air spring bellows is connected to two rigid connection members (14, 16) and partially filled with pourable solid bodies (18) formed from polymeric material, which is less compressible than air in order to increase the rigidity of the air spring,
b) the solid bodies (18) have dimensions which are substantially smaller than the distance between the two connection members (14, 16) when the air spring bellows (12) is in its compressed state,
characterised in that the connection members (14, 16) comprise a connection plate (14) and a roller piston (16), in that the air spring bellows is configured as a roller bellows and is mounted on an annular sealing seat on the upper connection plate (14) by its upper sealing bead and is mounted on an annular sealing seat on the end-face surface of the roller piston (16) by a lower sealing bead (15), in that the solid bodies (18) are spherical or granular and formed from a polymeric material which is substantially incompressible, resilient and wear-resistant, in that the diameter of the spherical solid bodies (18) is smaller than the difference between the internal diameter of the roller bellows (12) and the maximum external diameter of the roller piston plus the wall thickness of the roller bellows (12).

2. Air spring according to claim 1, characterised in that the air connection aperture (19) is covered by a screen (20).

## Revendications

1. Ressort pneumatique pour véhicule utilitaire, comprenant un soufflet de ressort pneumatique en élastomère qui peut être mis sous pression, avec les particularités suivantes :
a) le soufflet du ressort pneumatique est relié à deux éléments de raccordement rigides (14, 16) et il est rempli partiellement de corps solides (18) en matière polymère en vrac, matière qui est moins compressible que l'air pour augmenter la raideur du ressort pneumatique,
b) les corps solides (18) ont des dimensions qui sont beaucoup plus petites que la distance entre les deux éléments de raccordement (14, 16) lorsque le soufflet (12) du ressort pneumatique est à l'état comprimé,
caractérisé
· en ce que les éléments de raccordement (14, 16) sont constitués par une plaque de raccordement (14) et un piston roulant (16),
· en ce que le soufflet du ressort pneumatique est constitué par un soufflet roulant et est fixé, par son bourrelet d'étanchéité supérieur, à un siège d'étanchéité annulaire prévu sur la plaque de fermeture supérieure (14) et, par son bourrelet d'étanchéité inférieur (15), à un siège d'étanchéité annulaire formé sur la surface frontale du piston roulant (16),
· en ce que les corps solides (18) sont de forme sphérique ou de forme granulaire, et sont composés d'une matière polymère qui est sensiblement incompressible, élastique et résistante à l'usure,
· en ce que le diamètre des corps solides sphériques (18) est plus petit que la différence entre le diamètre intérieur du soufflet roulant (12) et le diamètre extérieur maximal du piston roulant additionné de l'épaisseur de paroi du soufflet roulant (12).

2. Ressort pneumatique selon la revendication 1, caractérisé en ce que l'ouverture de raccordement d'air (19) est recouverte d'un tamis (20).
